Europäisches Patentamt

(19) European Patent Office

Office européen des brevets

(11) Numéro de publication: **0 162 766**
**B1**

(12) **FASCICULE DE BREVET EUROPEEN**

(45) Date de publication du fascicule du brevet:
**17.11.88**

(51) Int. Cl.⁴: **H 01 G 4/38,** H 02 J 15/00

(21) Numéro de dépôt: **85400839.8**

(22) Date de dépôt: **29.04.85**

(54) **Dispositif de stockage à haute tension et à haute énergie et générateur d'impulsions en comportant application.**

(30) Priorité: **02.05.84 FR 8406814**

(43) Date de publication de la demande:
**27.11.85 Bulletin 85/48**

(45) Mention de la délivrance du brevet:
**17.11.88 Bulletin 88/46**

(84) Etats contractants désignés:
**AT CH DE GB IT LI SE**

(56) Documents cités:
**FR - A - 1 338 786
GB - A - 713 605
US - A - 3 559 007**

**PROCEEDINGS OF THE 10th MODULATOR
SYMPOSIUM, 21, 22 mai 1968, pages 274-294, New York,
US; J.J. MORIARTY et al.: "Megavolt modulators for
nanosecond radar"
JAPANESE JOURNAL OF APPLIED PHYSICS, vol. 20, no.
12, décembre 1981, pages 2397-2400, Tokyo, JP; Y.
KUBOTA et al.: "Study of the rectangular-like output
waveforms of a 720 kV coaxial marx generator"
IEEE TRANSACTIONS ON PLASMA SCIENCE, vol. PS-8,
no. 3, septembre 1980, pages 167-170, New York, US;
W.R. RAPOPORT et al.: "KrF laser-triggered SF6 spark
gap for low jitter timing"**

(73) Titulaire: **SOCIETE DE VERRERIE ET DE
THERMOMETRIE, 135 Rue de Théâtre, F-75015 Paris
(FR)**

(72) Inventeur: **Brion, Jean-Claude Adolphe, 11 Rive de la
Juine, F-91150 Ormoy La Riviere (FR)**
Inventeur: **Brunaud, Claude, 39 Rue de la Libération,
F-14114 Ver Sur Mer (FR)**
Inventeur: **Jean, Robert Paul Henri, 12 Grande Rue,
F-77160 Gregy sur Yerres (FR)**
Inventeur: **Machet, René Henri, 7 Rue de Vauréal,
F-95000 Jouy Le Moutier (FR)**

(74) Mandataire: **Moncheny, Michel et al, c/o Cabinet
Lavoix 2 Place d'Estienne d'Orves, F-75441 Paris
Cedex 09 (FR)**

## Description

La présente invention est relative au stockage de l'énergie électrique à haute tension dans un volume restreint. Elle concerne un dispositif de stockage d'énergie selon le préambule de la revendication 1, of par exemple le FR-A-1 338 786, et un générateur d'impulsions selon le préambule de la revendication 12. Les générateurs d'impulsions compacts ont une densité d'énergie stockée par unité de volume élevée, ces générateurs sont réalisés sur le principe du générateur de Marx à décharge de ligne ou à décharge capacitive.

Les générateurs de Marx utilisent des composants (résistances, condensateurs, lignes à constantes localisées ou réparties, éclateurs) assemblés entre eux mécaniquement et électriquement cf. par exemple Japanese Journal of Applied Physics, vol. 20, no. 12, décembre 1981, pages 2397–2400, Tokyo, J.P.

De par leurs formes géométriques, les éléments assurant le stockage de l'énergie, bien que présentant généralement une densité d'énergie intéressante, ne permettent pas de consacrer tout l'espace utile interne du générateur au stockage de l'énergie.

Dans ces dispositifs connus, les éclateurs sont indépendants et pressurisés et les électrodes sont maintenues dans une carcasse isolante et étanche. L'emploi d'éclateurs pressurisés étanches augmente les difficultés de réalisation du générateur ainsi que son coût. Le fait que les éclateurs soient indépendants nécessite de déclencher les premiers éclateurs du générateur.

La rigidité diélectrique nécessaire au bon fonctionnement des générateurs est assurée par un gaz isolant ou une huile à haute tension. La présence d'huile à haute tension se traduit par une augmentation du poids, du volume (réservoir de stockage) et du prix du générateur (système de filtrage, stockage, pompage, prix de l'huile). Par ailleurs, les opérations de maintenance sont longues et peu commodes.

Par conséquent, les générateurs d'impulsions à haute tension connus présentent les inconvénients suivants:
- faible densité de stockage de l'énergie par unité de poids et de volume;
- difficultés de réalisation et coûts élevés des éclateurs;
- nécessité d'en déclencher plusieurs;
- opérations de maintenance longues, délicates et onéreuses.

L'invention vise donc à remédier aux inconvénients des générateurs d'impulsions à haute tension en créant un générateur qui, en raison d'une intégration poussée de ses composants, présente une forte densité d'énergie par unité de poids et de volume.

L'invention a pour objet un dispositif de stockage d'énergie à haute tension et à haute énergie, comportant des éléments de stockage disposés en couronnes concentriques sur des éléments de séparation isolants, les éléments de stockage d'une couronne étant connectés par une de leurs extrémités aux éléments de stockage de la couronne précédente et par leur autre extrémité aux éléments de stockage de la couronne suivante, l'ensemble étant monté sur un noyau de matière isolante dure pourvu d'un alésage central, ledit dispositif, étant caractérisé en ce que l'ensemble est noyé dans un enrobage de matière isolante semi-souple destinée à absorber les chocs électromécaniques survenant lors du fonctionnement des éléments de stockage.

L'invention a également pour objet un générateur d'impulsions à haute tension et à haute énergie selon la revendication 12.

L'invention sera mieux comprise à l'aide de la description qui va suivre, donnée uniquement à titre d'exemple et faite en se référant aux dessins annexés, sur lesquels:

- la Fig. 1 est une vue en élévation en demicoupe d'un ensemble de condensateurs à haute tension et à haute densité d'énergie suivant l'invention;
- la Fig. 2 est une coupe transversale d'un autre mode de réalisation du condensateur suivant l'invention;
- la Fig. 3 est une vue en bout d'une variante de faible valeur et à très haute tension du condensateur suivant l'invention;
- les Fig. 4 et 5 sont respectivement des vues en demi-coupe suivant les lignes 4–4 et 5–5 de la Fig. 3;
- la Fig. 6 est un schéma électrique montrant la construction d'un générateur de Marx;
- la Fig. 7 est une vue partielle en demicoupe d'un générateur d'impulsions réalisé avec un ensemble de condensateurs suivant l'invention et selon le schéma de la Fig. 6;
- la Fig. 8 est une coup transversale à plus petite échelle d'un étage du générateur de la Fig. 7;
- la Fig. 9 est une coupe transversale à encore plus grande échelle de la partie centrale du générateur de la Fig. 8;
- la Fig. 10 est une coupe suivant la ligne 10–10 de la Fig. 9.

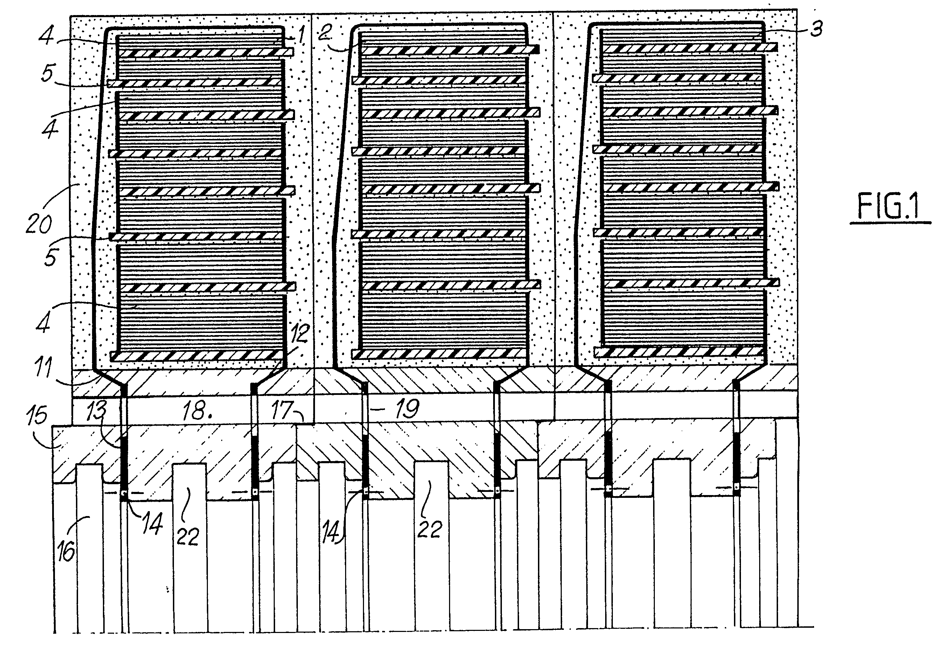

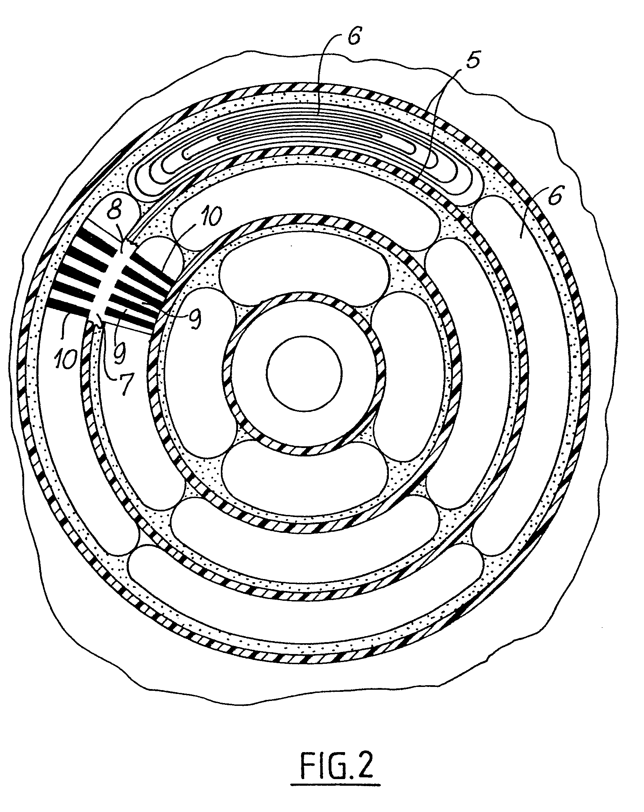

Sur les Fig. 1 et 2, on a représenté un ensemble de condensateurs suivant l'invention entrant dans la construction d'un générateur d'impulsions à haute tension tel qu'un générateur de Marx.

Un tel ensemble est constitué de plusieurs étages 1, 2, 3.

Le nombre et la constitution des condensateurs sont choisis afin d'optimiser la densité d'énergie en fonction des caractéristiques d'utilisation telles que la tension de service, la tension inverse, le courant de crête, la durée de la décharge, la durée de vie.

Chaque condensateur est réalisé sous la forme de couronnes concentriques individuelles 4 formées par bobinage de rubans constitués, comme connu en soi, de bandes conductrices et de pellicules en matière diélectrique, enroulés sur un mandrin isolant 5 constitué par enroulement filamentaire.

Les mandrins 5 sont disposés de façon qu'un mandrin sur deux fasse saillie par rapport à une face opposée du condensateur élémentaire.

Grâce à une telle disposition, il est possible de connecter l'armature d'une couronne 4 à l'armature de la couronne suivante et de réaliser ainsi de proche en proche la connexion en série de toutes les couronnes 4 pour former le condensateur élémentaire.

Afin d'assurer cette mise en série, les faces des couronnes 4 sont schoopées et une couronne de cuivre de faible épaisseur est appliquée sur les faces schoopées de deux couronnes 4 consécutives séparées par un mandrin 5 dont l'extrémité affleure les couronnes.

Un tel mode de connexion est représenté à la Fig. 2 qui représente un condensateur d'une conception légèrement différente de celle du condensateur de la Fig. 1.

On voit sur cette figure qu'au lieu d'être enroulées concentriquement sur les mandrins 5, les armatures du condensateur sont réalisées par des enroulements 6 bobinés d'abord sous forme cylindrique puis aplatis pour constituer des segments de cylindres placés côte à côte autour des mandrins isolants.

Après schoopage des faces des enroulements, des couronnes en cuivre telles que la couronne 7 sont disposées sur des rangées consécutives d'enroulements.

Chaque couronne 7 comprend une âme annulaire 8 disposée contre l'extrémité du mandrin séparateur correspondant. A partir de l'âme 8 et de part et d'autre de celle-ci s'étendent des languettes 9 disposées à intervalles réguliers.

Les encoches 10 ménagées entre les languettes 9 sont remplies de soudure lors de la fixation de la couronne de connexion sur les enroulements 6.

Bien entendu des couronnes de connexion analogues sont utilisées dans le condensateur de la Fig. 1.

En se reportant à nouveau à la Fig. 1, on voit que les connexions terminales 11, 12 de l'ensemble sont réalisées toutes deux d'une manière similaire.

Les connexions 11 et 12 sont ensuite soudées sur des couronnes plus épaisses en laiton 13 servant à la connexion des circuits de puissance extérieurs au condensateur.

Les couronnes de laiton 13 qui sont pourvues de trous taraudés 14 sont montées dans un noyau 15 en résine dure pourvu d'un alésage central 16 destiné à recevoir certains composants du générateur d'impulsions dont le condensateur doit faire partie.

Par ailleurs, les noyaux 15 sont pourvus de rebords épaulés de centrage 17 et sont traversés par des trous axiaux 18 destinés à recevoir des tiges filetées d'assemblage en matière isolante, par exemple en résine chargée de fibres de verre, destinées à assurer la solidarisation des divers condensateurs entre eux.

Les couronnes en laiton 13 sont également pourvues de trous 19 destinés à être traversés par lesdites tiges d'assemblage.

Chaque condensateur est obtenu par des opérations de surmoulage sous vide, le condensateur pouvant être imprégné au préalable.

Les mandrins 5 et les enroulements 4 sont noyés dans un enrobage 20 de résine semi-souple destinée à absorber les chocs électromécaniques survenant lors du fonctionnement des condensateurs.

La résine dure du noyau 15 et la résine semi-souple de l'enrobage 20 sont avantageusement constituées respectivement par une résine polyuréthane Damival 13–517 et par une résine polyuréthane Damival 13–521 fabriquées et vendues par la société Alsthom.

Chaque condensateur est ensuite usiné pour assurer la finition des épaulements de centrage 17.

Dans l'alésage 16 de chaque noyau 15 sont formées des encoches 22 destinées à assurer l'allongement des lignes de champ électrique.

Les résines dure et semi-souple du noyau 15 et de l'enrobage 20 sont choisies en fonction de leurs qualités diélectriques et de leur compatibilité (adhérence mutuelle).

Les condensateurs décrits en référence aux Fig. 1 et 2 sont respectivement réalisés à partir d'éléments en couronne concentriques (Fig. 1) et d'éléments plats agencés sous forme concentrique (Fig. 2).

Dans l'exemple de la Fig. 2, les couches successives d'éléments ont des plans de joint radiaux. Elles peuvent également avoir des plans de joint décalés.

Les mandrins isolants 5 peuvent être remplacés par des éléments de séparation constitués par exemple de feuilles épaisses de résine semi-souple.

On peut également réaliser selon une disposition analogue à celle de la Fig. 2, des condensateurs à très haute tension et de faible valeur appelés condensateurs de crête.

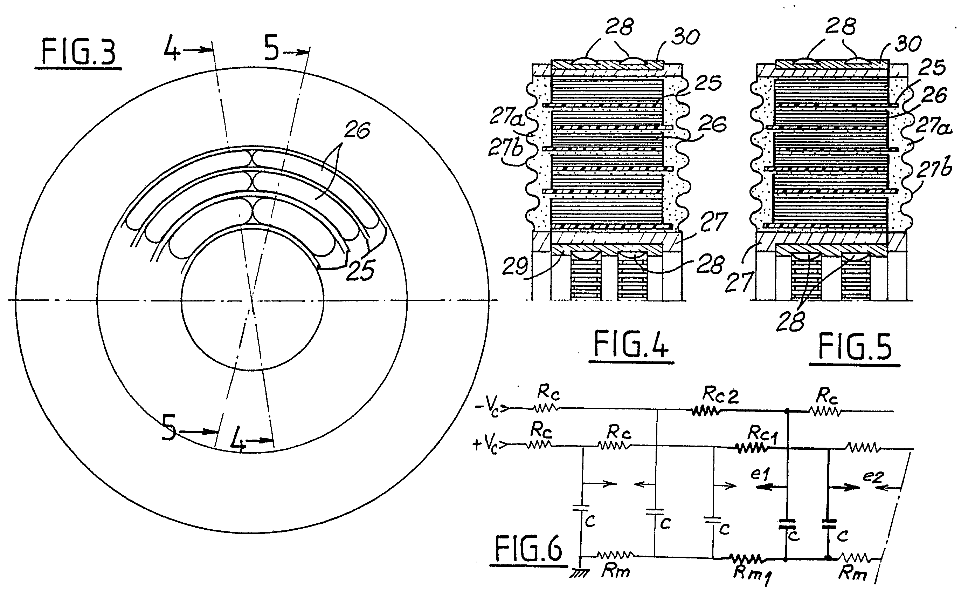

Un tel condensateur dont le nombre d'éléments dépend de la tension d'utilisation va maintenant être décrit en référence aux Fig. 3 à 5.

Le condensateur représenté à la Fig. 3 est réalisé d'une manière analogue à celle du condensateur de la Fig. 2.

Il comporte des mandrins isolants 25 sur lesquels sont disposés des enroulements aplatis 26 placés en couronnes concentriques. Les mandrins 25 sont décalés de la même façon que ceux du condensateur de la Fig. 1.

Ainsi qu'on peut le voir notamment aux Fig. 4 et 5, l'une des armatures du condensateur n'est plus ramenée dans le noyau 27. La connexion est effectuée sur le diamètre extérieur de la couronne.

Les connexions terminales sont munies de lamelles de contact 28 disposées à la périphérie d'une bague 29 intérieure du noyau 27 et à celle d'une bague 30 extérieure de l'ensemble réalisées en laiton ou en aluminium.

L'enrobage en matière semi-souble de ces condensateurs présente des faces d'extrémité pourvues d'ondulations 27b destinées à allonger les lignes de champ.

L'emploi de condensateurs élémentaires plats permet de diminuer la self inductance du condensateur en employant des connexions alternées sur les condensateurs élémentaires jointifs d'une même couche ainsi qu'on peut clairement le voir aux Fig. 4 et 5.

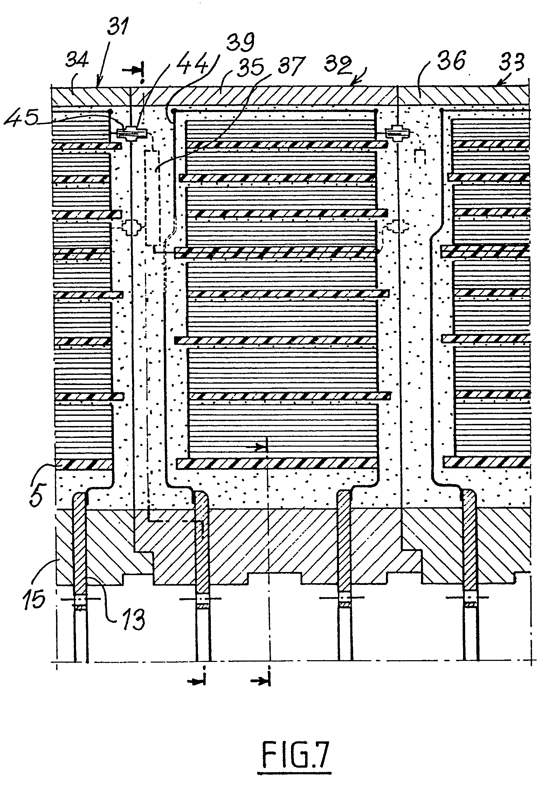

Le schéma de la Fig. 6 montre un étage de générateur de Marx symétrique représenté en trait plus épais que le reste du circuit.

Cet étage comprend une résistance de charge $R_{C2}$ alimentée par une tension négative $-V_c$ connectée en série avec une armature d'une capacité C reliée à une électrode d'un éclateur $E_1$, l'autre armature de cette capacité étant reliée à une résistance $R_{m1}$. Une autre résistance $R_{C1}$ alimentée par une tension positive $+V_c$ est connectée en série avec une armature d'une autre capacité C reliée à une électrode d'un autre éclateur $E_2$, l'autre armature de cette capacité étant connectée à la résistance $R_{m1}$ précitée.

Les étages du générateur de Marx sont tous réalisés de la même façon.

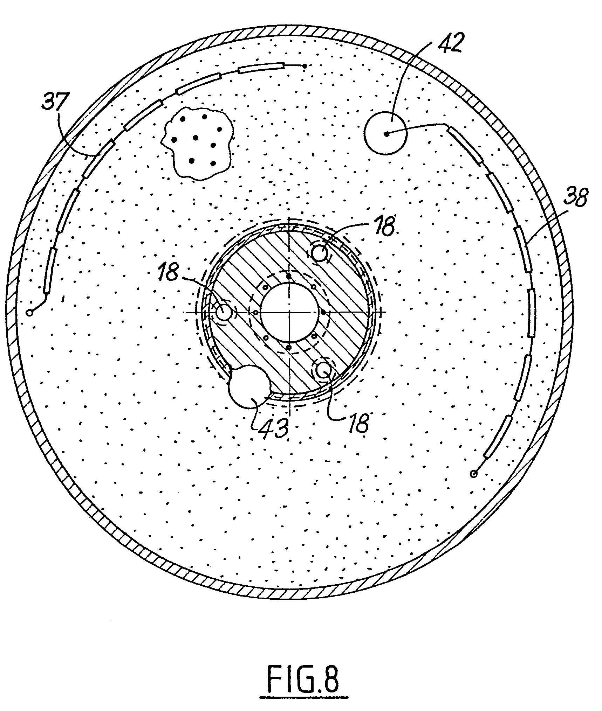

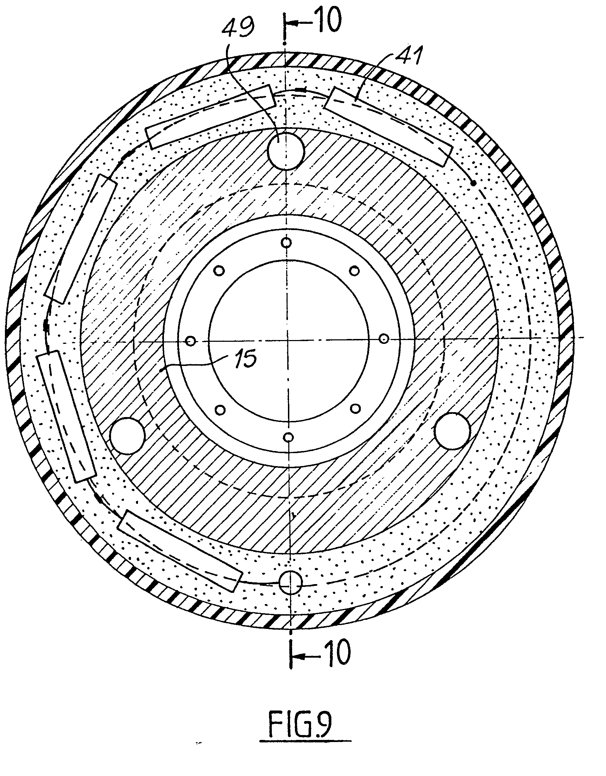

Sur les Fig. 7 à 10, on a représenté un exemple de générateur de Marx réalisé à l'aide de condensateurs du type décrit plus haut et conformément au schéma de la Fig. 6.

Ce générateur qui est du type symétrique comprend un ensemble formé de condensateurs 31, 32, 33, analogues à ceux décrits en référance aux Fig. 1 ou 2, disposés dans des enveloppes extérieures 34, 35, 36 en résine dure.

Le générateur de Marx comporte des résistances de charge 37, 38 qui dans le mode de réalisation représenté aux Fig. 7, 8 et 9 sont au nombre de six. Ces résistances 37 sont connectées en série ainsi que les résistances 38.

La forme de la connexion en couronne 39 reliant une armature de chaque condensateur à une couronne de laiton 13 correspondante (Fig. 7) a été adaptée pour permettre le logement des résistances $R_{C1}$ 37 et $R_{C2}$ 38. La résistance $R_{M1}$ matérialisée par les résistances 41, est disposée dans la partie centrale du dispositif entre le premier mandrin 5 et le noyau en résine dure 15. Deux évidements 42 et 43 pratiqués dans la couronne de liaison assurent le passage des connexions entre les résistances $R_{M1}$ 41 et $R_{C1}$ 37 d'une part et l'étage précédent d'autre part.

Les liaisons entre les étages 34, 35, 36 sont réalisées au moyen d'inserts en laiton 44 recevant des fiches à deux rangées de lamelles de contact 45.

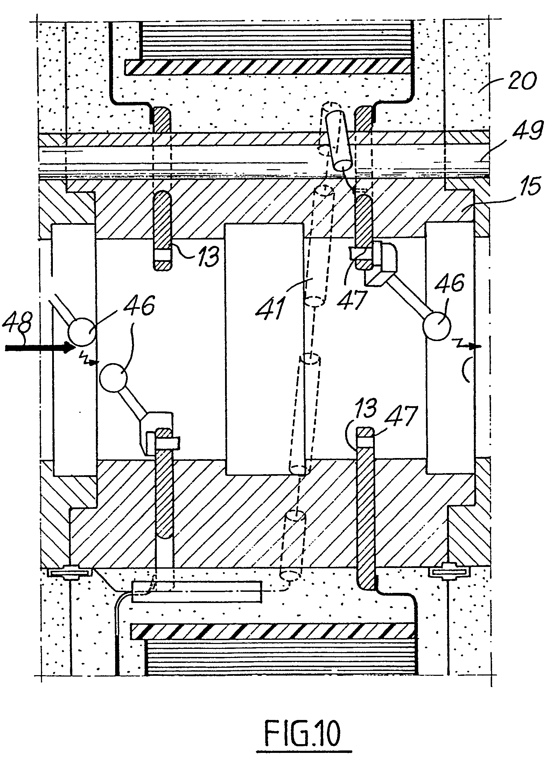

Des électrodes d'éclateurs 46 (Fig. 10) sont fixées sur les couronnes 13 par l'intermédiaire de vis engagés dans des trous taraudés 47 ou de tout autre système. La disposition des couronnes 13 permet la disposition en ligne des éclateurs ce qui offre l'avantage de favoriser leur déclenchement en cascade au moyen d'un faisceau laser axial 48 ou du rayonnement ultraviolet émis lors de l'amorçage des éclateurs des étages précédents.

Le volume disponible dans le noyau de chaque étage, permet en outre la mise en place d'éventuelles électrodes auxiliaires de déclenchement ainsi que des rampes de résistances correspondantes.

Les enveloppes 34, 35, 36 des étages du générateur sont avantageusement réalisées en résine dure en vue d'obtenir un bon dimensionnement géométrique facilitant le positionnement de chaque étage à l'intérieur du générateur.

Enfin, on voit sur la Fig. 10 que la liaison mécanique entre les étages successifs est obtenue par des tiges filetées 49 en résine chargée de fibres de verre logées dans les trous 18.

Le générateur d'impulsions décrit en référence aux Fig. 7 à 10 est un générateur dans lequel les dispositifs de stockage d'énergie sont des condensateurs. On peut également réaliser un générateur d'impulsions à haute tension et haute énergie dans lequel les dispositifs de stockage d'énergie sont constitués par des lignes de transmission agencées d'une manière analogue à celle décrite pour les condensateurs à l'exception de leurs connexions qui sont réalisées aux extrémités de chaque élément de stockage formant le dispositif de stockage d'énergie.

L'agencement qui vient d'être décrit permet d'obtenir des générateurs d'impulsion présentant les avantages suivants.
- Augmentation de la densité d'énergie;
- Eclateurs en lignes pouvant être déclenchés par rayonnement lumineux;
- Absence de carcasse étanche;
- Possibilité d'utiliser simplement des électrodes auxiliaires de déclenchement avec leur rampe de résistances;
- Maintenance aisée et rapide;

Enfin, les générateurs suivant l'invention sont d'un encombrement réduit, ce qui les rend aisément transportables et embarquables.

**Revendications**

1. Dispositif de stockage d'énergie à haute tension et à haute énergie, comportant des éléments de stockage (4; 6; 26) disposés en couronnes concentriques sur des éléments de séparation isolants (5; 25), les éléments de stockage d'une couronne étant connectés par une de leurs extrémités aux éléments de stockage de la couronne précédente et par leur autre extrémité aux éléments de stockage de la couronne suivante, l'ensemble étant monté sur un noyau (15; 27) de matière isolante dure pourvu d'un alésage central, ledit dispositif étant caractérisé en ce que l'ensemble est noyé dans un enrobage (20; 27a) de matière semi-souple, destinée à absorber les chocs électromécaniques survenant lors du fonctionnement des éléments de stockage.

2. Dispositif de stockage suivant la revendication 1, caractérisé en ce que lesdits éléments de stockage sont réalisés sous forme d'enroulements concentriques (4) de rubans formés de bandes conductrices revêtues de pellicules de matière diélectrique, disposés sur lesdits éléments de séparation isolants (5).

3. Dispositif de stockage suivant la revendication I, caractérisé en ce que lesdits éléments de stockage (6; 26) sont constitués par des enroulements de rubans formés de bandes conductrices revêtues de pellicule de matière diélectrique, aplatis en forme de secteurs de cylindre et disposés côte à côte autour desdits éléments de séparation isolants (5; 25).

4. Dispositif de stockage suivant l'une des revendications 1 à 3, caractérisé en ce que les éléments de séparation sont constitués par des mandrins isolants (5; 25) réalisés en enroulement filamentaire.

5. Dispositif de stockage suivant l'une des revendications 1 à 4, caractérisé en ce que les éléments de séparation isolants (5; 25) sont disposés de manière qu'un élément de séparation sur deux fasse saillie par rapport aux faces opposées du dispositif, un élément de stockage (4; 6; 26) étant connecté à l'élément de stockage (4; 6; 26) précédent par une face du dispositif et à l'élément de stockage (4; 6; 26) suivant par la face opposée dudit dispositif.

6. Dispositif de stockage d'énergie suivant l'une des revendications 1 à 5, caractérisé en ce qu'il est constitué par un condensateur, les armatures des éléments de condensateurs élémentaires (4; 6; 26) qui le constituent étant schoopées, les connexions entre armatures étant assurées par des couronnes (7) en cuivre pourvues de languettes radiales (9) s'étendant de part et d'autre d'une âme annulaire (8) et entre lesquelles sont ménagées des encoches (10) destinées à recevoir le métal d'assemblage.

7. Dispositif de stockage d'énergie, caractérisé en ce qu'il est constitué de plusieurs dispositifs de stockage suivant l'une des revendications 1 à 6, dont les noyaux (15) sont pourvus de moyens de centrage et de positionnement (17), lesdits dispositifs étant assemblés par des tiges filetées (49) en matière isolante traversant des orifices axiaux (18) ménagés dans lesdits noyaux.

8. Dispositif de stockage suivant l'une des revendications 1 à 6, caractérisé en ce que ses bornes sont ramenées sur des couronnes conductrices (13) prévues dans le noyau (15) en matière isolante dure.

9. Dispositif de stockage suivant l'une des revendications 1 à 6, caractérisé en ce que ses bornes sont ramenées l'une sur une bague conductrice (29) intérieure du noyau (27) et l'autre sur une bague (30) conductrice extérieure à l'ensemble, lesdites bagues étant munies de lamelles de contact (28).

10. Dispositif de stockage d'énergie suivant les revendications 3 et 9, prises ensemble, constitué par un condensateur, caractérisé en ce que les bornes des condensateurs élémentaires successifs d'une même couche sont connectés aux éléments correspondants d'une couche précédente et suivante de manière alternée.

11. Dispositif de stockage d'énergie suivant l'une des revendications 1 à 5 et 8 à 10, caractérisé en ce que lesdits éléments de stockage sont constitués par des lignes de transmission dont les connexions sont effectuées aux extrémités de chaque ligne.

12. Générateur d'impulsions à haute tension et haute énergie comprenant un dispositif de stockage d'énergie à haute tension et haute énergie formé d'éléments de stockage (31, 32, 33) auxquels sont connectées des résistances de charge, des éclateurs étant associés à deux éléments de stockage voisins, les électrodes (46) des éclateurs étant disposées dans l'espace formé par les alésages centraux des noyaux (15) des dispositifs de stockage (31, 32, 33), caractérisé en ce que le dispositif de stockage est du type suivant l'une des revendications 1 à 11, les résistances associées aux éléments de stockage étant noyées dans la matière isolante de l'enrobage (20).

13. Générateur d'impulsions suivant la revendication 12, caractérisé en ce que les électrodes (46) des éclateurs sont montées de manière que tous les éclateurs soient alignés dans ledit espace défini à l'intérieur des noyaux (15) des dispositifs de stockage et ainsi déclenchables par un rayonnement lumineux, lesdites électrodes (46) étant fixées sur des couronnes conductrices (13) des noyaux (15) formant bornes des dispositifs de stockage.

**Patentansprüche**

1. Hochenergie- und Hochspannungsspeichervorrichtung mit Speicherelementen (4; 6; 26), die in konzentrischen Kränzen (couronnes) auf isolierenden Trennelementen (5; 25) angeordnet sind, wobei die Speicherelemente eines Kranzes durch eines ihrer Enden mit den Speicherelementen des vorhergehenden Kranzes und durch ihr anderes Ende mit den Speicherelementen des nachfolgenden Kranzes verbunden sind, wobei die Anordnung auf einem Kern (15; 27) aus hartem Isoliermaterial angeordnet ist, der mit einer zentralen Bohrung versehen ist, wobei die Vorrichtung dadurch gekennzeichnet ist, dass die Anordnung in eine Umhüllung (20; 27a) von halbweichem Material eingetaucht ist, welches dazu bestimmt ist, elektromechanische Stösse zu absorbieren, welche während des Betriebs der Speicherelemente auftreten.

2. Speichervorrichtung nach Anspruch 1, dadurch gekennzeichnet, dass die Speicherelemente in Form von konzentrischen Bänderwicklungen (4) aus leitenden Streifen gebildet sind, die mit dünnen Folien aus dielektrischem Material bedeckt sind, die auf den isolierenden Trennelementen (5) angeordnet sind.

3. Speichervorrichtung nach Anspruch 1, dadurch gekennzeichnet, dass die Speicherelemente (6; 26) aus leitenden Streifen gebildeten Bänderwicklungen gebildet sind, die mit dünnen Folien aus dielektrischem Material bedeckt sind, welche in Form von zylindrischen Sektoren abgeflacht und Seite an Seite um die isolierenden Trennelemente (5; 25) angeordnet sind.

4. Speichervorrichtung nach einem der Ansprüche 1 bis 3, dadurch gekennzeichnet, dass die Trennelemente durch isolierende Dorne (5; 25) gebildet sind, die im Präzisionswickelverfahren hergestellt sind.

5. Speichervorrichtung nach einem der Ansprüche 1 bis 4, dadurch gekennzeichnet, dass die isolierenden Trennelemente (5; 25) derartig angeordnet sind, dass von zwei Trennelementen eines bezüglich gegenüberliegender Seiten der Vorrichtung vorspringt, wobei ein Speicherelement (4; 6; 26) mit dem vorhergehenden Speicherelement (4; 6; 26) durch eine Seite der Vorrichtung verbunden ist und mit dem nachfolgenden Speicherelement (4; 6; 26) durch die gegenüberliegende Seite der Vorrichtung verbunden ist.

6. Energiespeichervorrichtung nach einem der Ansprüche 1 bis 5, dadurch gekennzeichnet, dass sie aus einem Kondensator gebildet ist, wobei die Anschlussstücke der Elementarkondensatorelemente (4; 6; 26), die ihn bilden, schoopiert sind (Schoop'sches Metallspritzverfahren), wobei die Verbindungen zwischen Anschlussstücken durch Kappen bzw. Kränze (7) aus Kupfer sichergestellt sind, die mit radialen Zungen (9) versehen sind, die sich beiderseits einer ringförmigen Seele (8) erstrecken, und zwischen denen Kerben (10) ausgebildet sind, die dazu bestimmt sind, das Anschlussmetall aufzunehmen.

7. Energiespeichervorrichtung, dadurch gekennzeichnet, dass sie aus einer Mehrzahl von Speichervorrichtungen nach einem der Ansprüche 1 bis 6 gebildet ist, deren Kerne (15) mit Zentrier- und Positioniereinrichtungen (17) versehen sind, wobei die Vorrichtungen durch Schraubenspindeln (49) aus isolierendem Material zusammengefügt sind, die achsiale Öffnungen (18) durchqueren, die in den Kernen ausgebildet sind.

8. Speichervorrichtung nach einem der Ansprüche 1 bis 6, dadurch gekennzeichnet, dass seine Ränder auf leitende Ringe oder Kränze (13) umgeschlagen sind, die in dem Kern (15) aus hartem isolierendem Material vorgesehen sind.

9. Speichervorrichtung nach einem der Ansprüche 1 bis 6, dadurch gekennzeichnet, dass einer seiner Ränder auf einen leitenden Ring (29) im Inneren des Kerns (27) und der andere auf einen leitenden Ring (30) umgeschlagen sind, der sich ausserhalb der Anordnung befindet, wobei die Ringe mit Kontaktlamellen (28) versehen sind.

10. Energiespeichervorrichtung nach den Ansprüchen 3 und 9 zusammen, gebildet aus einem Kondensator, dadurch gekennzeichnet, dass die Ränder der in einer gleichen Schicht aufeinanderfolgenden Elementarkondensatoren mit entsprechenden Elementen einer vorhergehenden und nachfolgenden Schicht in alternierender Weise verbunden sind.

11. Energiespeichervorrichtung nach einem der Ansprüche 1 bis 5 und 8 bis 10, dadurch gekennzeichnet, dass die Speicherelemente durch Übertragungslinien gebildet sind, deren Verbindungen an den Enden einer jeden Linie ausgebildet sind.

12. Hochspannungs- und Hochenergieimpulsgenerator mit einer Hochenergie- und Hochspannungsspeichervorrichtung, gebildet aus Speicherelementen (31, 32, 33) mit denen Lastwiderstände verbunden sind, wobei Entlader zwei benachbarten Speicherelementen zugeordnet sind, wobei die Elektroden (46) der Entlader in dem durch die zentralen Bohrungen der Kerne (15) der Speichervorrichtungen (31, 32, 33) gebildeten Raums angeordnet sind, dadurch gekennzeichnet, dass die Speichervorrichtung vom Typ gemäss einem der Ansprüche 1 bis 11 ist, wobei die den Speicherelementen zugeordneten Widerstände in das isolierende Material der Umhüllung (20) eingetaucht sind.

13. Impulsgenerator nach Anspruch 12, dadurch gekennzeichnet, dass die Elektroden (46) der Entlader derart angeordnet sind, dass alle Entlader in dem im Inneren der Kerne (15) der Speichervorrichtungen definierten Raum ausgerichtet sind und somit durch eine Lichtstrahlung entladbar sind, wobei die Elektroden (46) auf leitenden Ringen oder Kränzen (13) von Kernen (15) festgelegt sind, die die Ränder der Speichervorrichtungen bilden.

## Claims

1. A high voltage, high energy device for storing energy, comprising storage elements (4; 6; 26) disposed in concentric rings on insulating separating elements (5; 25), the storage elements of one ring being connected via one end to the storage elements of the preceding ring and via the other end to the storage elements of the following ring, the assembly being mounted on a core (15; 27) of hard insulating material formed with a central bore, the device being characterized in that the assembly is embedded in a coating (20; 27a) of semi-flexible material adapted to absorb the electromechanical shocks occurring during the operation of the storage elements.

2. A storage device according to claim 1, characterized in that the storage elements take the form of concentric windings (4) of conductive strips covered with films of dielectric material disposed on the insulating separating elements (5).

3. A storage device according to claim 1, characterized in that the storage elements (6; 26) are formed by windings of conductive strips covered with a film of dielectric material and flattened in the form of sectors of a cylinder and disposed side by side around the insulating separating elements (5; 25).

4. A storage device according to one of claims 1 to 3, characterized in that the separating elements are formed by insulating mandrels (5; 25) in the form of a filamentary winding.

5. A storage device according to one of claims 1 to 4, characterized in that the insulating separating elements (5; 25) are so disposed that every other separating element projects from opposite faces of the device, one storage element (4; 6; 26) being connected to the preceding storage element (4; 6; 26) via one face of the device and to the following storage element (4; 6; 26) via the opposite face of the device.

6. An energy storage device according to one of claims 1 to 5, characterized in that it is formed by a capacitor comprising elementary capacitors (4; 6; 26) having capacitor plates which are schooped, the connections between the plates being made by copper rings (7) having radial tongues (9) which extend on either side of an annular web (8) and between which notches (10) are made for receiving the assembly metal.

7. An energy storage device characterized in that it is formed by a number of storage devices according to one of claims 1 to 6 whose cores (15) have centring and positioning means (17), said devices being assembled via screwthreaded rods (49) made from insulating material extending through axial openings (18) in the cores.

8. A storage device according to one of claims 1 to 6, characterized in that its terminals are connected to conductive rings (13) provided in the core (15) of hard insulating material.

9. A storage device according to one of claims 1 to 6, characterized in that one of its terminals is connected to a conductive ring (29) inside the core (27), the other being connected to a conductive ring (30) outside the assembly, the rings being provided with contact strips (28).

10. An energy storage device according to claims 3 and 9 taken together, formed by a capacitor, characterized in that the terminals of the successive elementary capacitors of a given layer are connected alternately to the corresponding elements of a preceding layer and a following layer.

11. An energy storage device according to one of claims 1 to 5 and 8 to 10, characterized in that the storage elements are formed by transmission lines having connections at the ends of each line.

12. A high voltage, high energy pulse generator comprising a high voltage, high energy device for storing energy, formed by storage elements (31, 32, 33) to which load resistors are connected, spark gaps being associated with two adjacent storage elements, the electrodes (46) of the spark caps being disposed in the space formed by the central bores of the cores (15) of the storage devices (31, 32, 33), characterized in that the storage device is of the kind set forth in one of claims 1 to 11, the resistors associated with the storage elements being embedded in the insulating material of the coating (20).

13. A pulse generator according to claim 12, characterized in that the electrodes (46) of the spark gaps are so mounted that all the spark gaps are aligned in such space defined inside the cores (15) of the storage devices and can therefore be triggered by a light radiation, the electrodes (46) being attached to conductive rings (13) of the cores (15) forming terminals of the storage devices.

FIG.1

FIG.2

FIG.3

FIG.4

FIG.5

FIG.6

## FIG.7

FIG.8

FIG.9

FIG.10